# EUROPÄISCHE PATENTSCHRIFT

(11) **EP 2 174 783 B1**
(45) Veröffentlichungstag und Bekanntmachung des Hinweises auf die Patenterteilung: **21.12.2011**
(21) Anmeldenummer: 09011992.6
(22) Anmeldetag: 21.09.2009
(51) Int. Cl.: B32B 27/12, B32B 27/28, B32B 27/30, D06N 3/04

(54) **Verbund auf Basis von thermoplastischem Fluorpolymer**
Compound on the basis of thermoplastic fluoropolymer
Composite à base de fluoropolymère thermoplastique

(30) Priorität: 08.10.2008 DE 202008013246 U
(43) Veröffentlichungstag der Anmeldung: 14.04.2010
(73) Patentinhaber: Fitz, Johannes, 83370 Seeon (DE)
(72) Erfinder: Fitz, Johannes, 83370 Seeon (DE)
(74) Vertreter: Manitz, Finsterwald & Partner GbR

(56) Entgegenhaltungen:
- DE-U1- 29 620 579
- DE-U1-202004 020 048
- US-A1- 2007 032 152

## Beschreibung

Die vorliegende Erfindung betrifft einen Verbund auf Basis von thermoplastischem Fluorpolymer, welcher wenigstens ein textiles Gebilde und wenigstens eine darauf aufgebrachte Schicht umfasst, wobei das wenigstens eine textile Gebilde und die wenigstens eine darauf aufgebrachte Schicht jeweils aus Materialien bestehen, welche ein Terpolymer aus Tetrafluorethylen, Hexafluorpropen und Vinylidenfluorid enthalten.

Fluorpolymere, wie beispielsweise das nicht thermoplastische Polytetrafluorethylen (PTFE), und thermoplastische Fluorpolymere, wie beispielsweise Copolymere aus Tetrafluorethylen und Perfluorpropylvinylether (PFA), Copolymere aus Tetrafluorethylen und Perfluormethylvinylether (MFA), Copolymere aus Tetrafluorethylen und Hexafluorpropylen (FEP), Copolymere aus Ethylen und Tetrafluorethylen (ETFE), Copolymere aus Ethylen und Fluor-Ethylen-Propylen (EFEP), Ethylen-Chlortrifluorethylen-Fluorcopolymer (ECTFE), Polyvinylidenfluorid (PVDF) und Terpolymere (THV) aus Tetrafluorethylen (TFE), Hexafluorpropylen (HFP) und Vinylidenfluorid (VDF), sind bekannte Hochleistungswerkstoffe mit extremer Witterungsbeständigkeit, schwerer Entflammbarkeit sowie guter Beständigkeit gegenüber Lösemitteln und Chemikalien, welche sich zudem durch ausgezeichnete elektrische Eigenschaften und gute schmutz- und wasserabstoßende Eigenschaften auszeichnen. Aus diesen Fluorpolymeren hergestellte Fasern, Filamente und daraus bestehende textile Gebilde werden beispielsweise unbeschichtet in Filtern und Sieben im chemischen Apparatebau und Umweltschutz-Anlagenbau eingesetzt. Ferner werden diese im Bereich der textilen Architektur und des Membranbaus eingesetzt.

Solche Verbunde werden beispielsweise in der EP 1 674 255 B1 offenbart. Diese Verbunde auf Basis von Fluorpolymeren umfassen wenigstens ein textiles Gebilde und wenigstens eine darauf aufgebrachte Schicht, wobei das wenigstens eine textile Gebilde aus einer Mischung von wenigstens einem, in halogenfreien organischen Lösemitteln unlöslichen Perfluorpolymer und wenigstens einem, in halogenfreien organischen Lösemitteln löslichen, teilfluorierten Fluorpolymer und ggf. weiteren Polymeren aufgebaut ist, und wobei die wenigstens eine darauf aufgebrachte Schicht wenigstens ein in halogenfreien organischen Lösemitteln lösliches, teilfluoriertes Fluorpolymer enthält.

Allerdings weisen die bekannten textilen Verbunde auf Basis von Fluorpolymeren den Nachteil auf, dass die Haftung der einzelnen Schichten untereinander verbesserungsbedürftig ist und die einzelnen Schichten und das textile Gebilde nur schwer miteinander thermisch einheitlich durchdringend verbunden bzw. verschweißt werden können.

Aufgabe der vorliegenden Erfindung war es daher, einen Verbund bereitzustellen, dessen einzelnen Schichten besonders fest aneinander haften und dessen Schichten leicht thermisch miteinander festhaftend verbunden werden können.

Erfindungsgemäß wird diese Aufgabe gelöst durch einen Verbund gemäß Patentanspruch 1 und insbesondere durch einen Verbund auf Basis von thermoplastischem Fluorpolymer umfassend wenigstens ein textiles Gebilde und wenigstens eine darauf aufgebrachte Schicht, wobei das wenigstens eine textile Gebilde und die wenigstens eine darauf aufgebrachte Schicht jeweils aus Materialien bestehen, welche ein Terpolymer aus Tetrafluorethylen, Hexafluorpropen und Vinylidenfluorid enthalten, und wobei das in dem wenigstens einen textilen Gebilde enthaltene Terpolymer einen höheren Kristallitschmelzpunkt aufweist als das in der wenigstens einen darauf aufgebrachten Schicht enthaltene Terpolymer.

Im Rahmen der vorliegenden Erfindung konnte überraschenderweise gefunden werden, dass jeweils auf Basis von Terpolymeren (THV) aus Tetrafluorethylen (TFE), Hexafluorpropen (HFP) und Vinylidenfluorid (VDF) aufgebaute Schichten festhaftend miteinander verbunden werden können und insbesondere leicht thermisch miteinander verbunden werden können, wenn das in dem wenigstens einen textilen Gebilde enthaltene Terpolymer einen höheren Kristallitschmelzpunkt aufweist als das in der wenigstens einen darauf aufgebrachten Schicht enthaltene Terpolymer. Die dabei erzielte Haftung der miteinander verbundenen Schichten ist extrem hoch und entspricht den Festigkeiten der auf das textile Gebilde aufgebrachten Schichten. Zudem können die resultierenden Verbunde in vorteilhafter Weise die einzelnen Schichten erfassend bei Fügetechniken durchdringend thermisch verschweißt werden. Ohne an eine Theorie gebunden werden zu wollen, scheint es, dass dies auf den bezüglich der Monomerzusammensetzung chemisch einheitlichen Aufbau der in den einzelnen Schichten enthaltenen Terpolymere, nämlich THV, zurückzuführen ist, wobei ein Schmelzen des textilen Gebildes beim thermischen Verbinden der einzelnen Schichten (beispielsweise durch Heißkaschieren) aufgrund des höheren Kristallitschmelzpunktes des textilen Gebildes im Vergleich zu dem der darauf aufzubringenden Schicht und eine damit einhergehende Zerstörung des textilen Gebildes zuverlässig vermieden wird.

Unter Kristallitschmelzpunkt wird im Sinne der vorliegenden Erfindung im Einklang mit der fachüblichen Definition dieses Begriffs die Probentemperatur an der Spitze des durch dynamische Differenzkalorimetrie (DSC; "differential scanning calorimetry") erhaltenen Schmelzpeaks verstanden. Mithin wird der Kristallitschmelzpunkt von THV mit DSC bestimmt.

Besonders gute Ergebnisse im Hinblick auf eine feste Haftung des textilen Gebildes und der darauf aufgebrachten Schicht(en) und insbesondere der leichten thermischen Verbindbarkeit der vorgenannten Schichten werden insbesondere erreicht, wenn das in dem wenigstens einen textilen Gebilde enthaltene THV-Terpolymer einen um zumindest 10 °C höheren Kristallitschmelzpunkt aufweist als das in der wenigstens einen darauf aufgebrachten Schicht enthaltene THV-Terpolymer.

Gemäß einer bevorzugten Ausführungsform der vorliegenden Erfindung weist das in dem wenigstens einen textilen Gebilde enthaltene THV-Terpolymer einen Kristallitschmelzpunkt zwischen 150 und 200 °C auf und weist das in der wenigstens einen darauf aufgebrachten Schicht enthaltene THV-Terpolymer einen Schmelzpunkt zwischen 100 und 130 °C auf.

Grundsätzlich kann das Material, aus dem das wenigstens eine textile Gebilde besteht, neben einem THV-Terpolymer eine oder mehrere weitere Verbindungen enthalten. Beispiele hierfür sind beispielsweise solche ausgewählt aus der aus Glas, Kohlenstoff, Polyamid, Polytetrafluorethylen, Polyester, Aramid und beliebigen Mischungen von zwei oder mehr der vorstehenden Verbindungen bestehenden Gruppe. Bei dieser Ausführungsform ist es jedoch bevorzugt, dass das wenigstens eine textile Gebilde aus einem Material besteht, welches 30 bis 50 Gew.-% THV-Terpolymer enthält.

Alternativ dazu besteht das wenigstens eine textile Gebilde aus einem Material, welches aus einem THV-Terpolymer oder aus einer Mischung aus zwei oder mehr verschiedenen THV-Terpolymeren besteht, d.h. das Material enthält keine von THV chemisch verschiedene Verbindung. Diese Ausführungsform ist besonders bevorzugt, weil damit eine besonders feste Haftung des textilen Gebildes an die darauf aufgebrachten Schichten erreicht wird. In der Mischung aus zwei oder mehr THV-Terpolymeren können beispielsweise THV-Terpolymere mit sich jeweils unterscheidenden Molekulargewichten eingesetzt werden oder THV-Terpolymere, welche sich voneinander hinsichtlich ihres Molverhältnisses TFE/HFP/VDF unterscheiden, oder THV-Terpolymere, welche sich voneinander hinsichtlich ihrer Taktizität oder ihrer Monomeranordnung (statistisch, blockweise, alternierend etc.) unterscheiden.

Vorzugsweise ist das textile Gebilde als Gewebe, Gewirke und/oder Gelege ausgebildet.

Bei der vorstehend erstgenannten, weniger bevorzugten Ausführungsform, in der das Material, aus dem das wenigstens eine textile Gebilde besteht, neben einem THV-Terpolymer eine oder mehrere weitere Verbindungen enthält, kann das Gewebe, Gewirke und/oder Gelege beispielsweise aus Bikomponentenfasern aufgebaut sein, wobei die einzelnen Fasern ein THV-Terpolymer und beispielsweise eine weitere Verbindung ausgewählt aus der aus Glas, Kohlenstoff, Polyamid, Polytetrafluorethylen, Polyester, Aramid und beliebigen Mischungen von zwei oder mehr der vorstehenden Verbindungen bestehenden Gruppe enthalten. Dabei können die einzelnen Fasern beispielsweise eine Kern-/Mantel-Struktur aufweisen, wobei das THV-Terpolymer beispielsweise den Mantel ausbildet und die andere Verbindung den Faserkem ausbildet.

In Weiterbildung des Erfindungsgedankens wird es vorgeschlagen, dass die wenigstens eine auf das textile Gebilde aufgebrachte Schicht aus einem Material besteht, welches aus einem THV-Terpolymer oder aus einer Mischung aus zwei oder mehr verschiedenen THV-Terpolymeren aufgebaut ist und vorzugsweise daraus besteht.

Alternativ dazu ist es auch möglich, dass die wenigstens eine Schicht aus einem Material besteht, welches aus einer Mischung aus einem THV-Terpolymer und einer weiteren Verbindung ausgewählt aus der aus Glas, Kohlenstoff, Polyamid, Polytetrafluorethylen, Polyester, Aramid und beliebigen Mischungen von zwei oder mehr der vorstehenden Verbindungen bestehenden Gruppe aufgebaut ist.

Ferner kann das Material der wenigstens einen Schicht ferner wenigstens einen weiteren Zusatzstoff ausgewählt aus der aus Farbstoffen, Pigmenten, Füllstoffen, Additiven oder beliebigen Mischungen hiervon bestehenden Gruppe enthalten. Vorzugsweise enthält die wenigstens eine auf das textile Gebilde aufgebrachte Schicht Polytetrafluorethylen, vorzugsweise in Form von Pulver, weil dadurch die gleit-und schmutzabweisenden Eigenschaften des Verbundes verbessert werden können.

Vorzugsweise ist die wenigstens eine Schicht unmittelbar, d.h. insbesondere ohne weitere Zwischenschicht, auf dem wenigstens einen textilen Substrat aufgebracht.

Dabei kann die wenigstens eine Schicht eine Folie oder Platte sein, welche auf dem wenigstens einen textilen Gebilde vorzugsweise auflaminiert ist.

Gemäß einer weiteren bevorzugten Ausführungsform der vorliegenden Erfindung weist der Verbund eine Durchlässigkeit für sichtbares Licht, d.h. Licht mit einer Wellenlänge von 380 bis 780 nm, von zumindest 50 % auf.

Beispielsweise zur Verwendung als Schallschutzmaterial kann der Verbdund flächenförmig ausgebildet sein und Öffnungen aufweisen, beispielsweise in Form von Löchern oder Schlitzen. Ferner kann der Verbund mit aufkaschierten geschäumten Platten und Folien aus Polymeren verschiedenster Art kombiniert werden, wobei die Schäume dabei je nach Wirkungsweise offene oder geschlossene Poren aufweisen können. Ferner kann es je nach Verwendung auch zweckmäßig sein, die Öffnungen des Verbundes mit Folien oder Platten beispielsweise aus THV-Terpolymer festhaftend zu verschließen.

Ein weiterer Gegenstand der vorliegenden Erfindung ist ein Verfahren zur Herstellung eines zuvor beschriebenen Verbundes, welches die nachfolgenden Schritte umfasst:
a) Herstellen eines textilen Gebildes aus einem Material, welches ein Terpolymer aus Tetrafluorethylen, Hexafluorpropen und Vinyliden- fluorid enthält, und
b) Aufbringen von wenigstens einer Schicht auf das textile Gebilde, wobei die wenigstens eine Schicht aus einem Material besteht, wel- ches ein Terpolymer aus Tetrafluorethylen, Hexafluorpropen und Vinylidenfluorid enthält.

Dabei kann die wenigstens eine Schicht auf das textile Gebilde aufgebracht werden, indem eine Lösung, welche ein organisches Lösemittel und darin gelöstes THV-Terpolymer enthält, auf das textile Gebilde aufgebracht wird und das Lösemittel anschließend beispielsweise durch Trocknen entfernt wird.

Alternativ dazu kann die wenigstens eine Schicht auch auf das textile Gebilde aufgebracht werden, indem eine wässrige Dispersion, welche das THV-Terpolymer enthält, auf das textile Gebilde aufgebracht wird und das Wasser anschließend beispielsweise durch Trocknen entfernt wird.

Schließlich ist es auch möglich, die wenigstens eine Schicht auf das textile Gebilde durch Schmelzbeschichtung aufzubringen.

Ein weiterer Gegenstand der vorliegenden Erfindung ist die Verwendung des zuvor beschriebenen Verbundes als Abdeckung oder Bespannung im Schiffsbau oder in der Luft- und Raumfahrt, als Membran in der Architektur oder in der Solartechnik oder als Lärmschutzmaterial.

Im Folgenden wird die Erfindung anhand von diesen beschreibenden, diese aber nicht einschränkenden Beispielen erläutert.

### Beispiel 1

Aufbau eines Verbundes auf Basis von THV-Fluorthermoplast.

### 1.1 Textiles Gebilde

Das textile Gebilde wurde aus von der Firma Dyneon GmbH unter dem Handelsnamen DyneonT^{M} THV 415 kommerziell vertriebenem THV-Terpolymer (durch DSC bestimmter Kristallitschmelzpunkt: 155 °C) hergestelltem Multifilament Garn mit 500 dtex mit einer Leinenbindung L1/L1 und einem Flächengewicht von ca. 300 g/m² hergestellt.

### 1.2 Polymerlösung für Beschichtung

Es wurde eine Polymerlösung aus von der Firma Dyneon GmbH unter dem Handelsnamen DyneonT^{M} THV 220 kommerziell vertriebenem THV-Terpolymer (durch DSC bestimmter Kristallitschmelzpunkt: 125 °C) in Methylethylketon (MEK) mit einer THV-Konzentration von 15 Gew. % (Feststoff) hergestellt.

### 1.3 Ausführung der Beschichtung

In einer konventionellen Beschichtungsanlage wurde eine wie unter dem Beispiel 1.1 beschrieben hergestellte, 1,5 m breite Stoffbahn in einer Tauchwanne mittels Tauchbeschichtung in der unter dem Beispiel 1.2 beschriebenen Lösung beidseitig nass beschichtet. Die überschüssige Beschichtungsmasse wurde mittels Rackel entfernt und das beschichtete Gewebe wurde kontinuierlich in einem Trockenkanal mit einem Temperaturprofil von 80 °C - 120 °C - 155 °C behandelt.

### 1.4 Beschreibung des Verbundes

Mit den unter dem Beispiel 1.3 beschriebenen Verfahrensschritten wurde ein gleichmäßig aufgebauter Verbund erhalten, der beidseitig eine TFE - HFP - VDF Schicht aus THV 220 mit einer Schichtdicke von je 20 µm pro Schicht trug. Bei ausgezeichneter Haftung der Einzelschichten untereinander konnten Zuschnitte des Verbundes thermisch bei Temperaturen in einem Bereich zwischen 155 °C und 200 °C verschweißt werden. Die Gesamtlicht-Transmission (VIS) des Verbundes im Durchlicht betrug 62 %.

### Beispiel 2

Aufbau eines 3-Schicht THV Fluorthermoplast Verbundes aus textilem Gebilde und Folien.

### 2.1 Textiles Gebilde

Es wurde ein wie in dem Beispiel 1.1 beschrieben hergestelltes textiles Gewebe eingesetzt.

### 2.2 Folien zur Herstellung des Verbundes

Es wurden Flachfolien aus von der Firma Dyneon GmbH unter dem Handelsnamen DyneonT^{M} THV 220 kommerziell vertriebenem THV-Terpolymer (durch DSC bestimmter Kristallitschmelzpunkt: 125 °C) mit einer Reißfestigkeit von 25 bis 30 N/mm² und mit einer Reißdehnung von 500 bis 700 % eingesetzt. Die Foliendicke betrug 25 µm.

### 2.3 Ausführung der Verbundherstellung

Die zum Einsatz gelangende Gewebebahn gemäß Beispiel 2.1 wurde in einem Kaschierwalzwerk bei einer Oberflächentemperatur der Walzen von 260 °C unter schwachem Berührungsdruck mit 2 Folienbahnen in der Weise verbunden, dass auf der Gewebebahn auf der Ober- und Unterseite jeweils eine Folienschicht zum Liegen kam.

Die Geschwindigkeit des Kaschiervorganges betrug dabei 8 m/Minute.

### 2.4 Beschreibung des Verbundes

Es wurde ein gleichmäßiger Verbund mit extrem glatter Oberfläche erhalten, der nur unter Zerstörung des Gesamtverbundes in die Einzelschichten getrennt werden konnte.

### Beispiel 3

Aufbau eines 2-Schicht THV Fluorthermoplast Verbundes aus textilem Gebilde und Beschichtung aus der Schmelze.

### 3.1 Textiles Gebilde

Zum Einsatz gelangte ein in Leinwandbindung L1/L1 hergestelltes Folienbändchengewebe aus von der Firma Dyneon GmbH unter dem Handelsnamen DyneonT^{M} THV 500 kommerziell vertriebenem THV-Terpolymer (durch DSC bestimmter Kristallitschmelzpunkt: 165 °C).

Die textilen Daten waren wie folgt:
Flächengewicht:~ 400 g/m²
Fadendichte (Folienstreifen): 2/cm
Folienstreifen (Bändchen): 5 mm, Foliendicke: 0,1 mm

### 3.2 Schmelzbeschichtung - Herstellung des Verbundes

Auf einer Schmelzbeschichtungsanlage bestehend aus Extrusionseinheit und Kaschierwalzenpaaren wurde das in Beispiel 3.1 beschriebene Gewebe kontinuierlich auf eine Temperatur von 130 °C bis 140 °C vorgeheizt und auf dieses wurde mittels einer Extrusionseinheit, welche aus Extruder und Flachfoliendüse bestand, eine Schmelze bestehend aus von der Firma Dyneon GmbH unter dem Handelsnamen DyneonT^{M} THV 220 kommerziell vertriebenem THV-Terpolymer (durch DSC bestimmter Kristallitschmelzpunkt: 125 °C) bei einer Massetemperatur von 170 °C als dünner Film aufgetragen und nach dem Kaschiervorgang unmittelbar mit einem Kühlwalzenpaar auf Raumtemperatur abgekühlt. Die Beschichtungsgeschwindigkeit betrug 5 bis 7 m/Minute.

### 3.3 Beschreibung des Verbundes

Es wurde ein optisch gleichmäßiger Gewebe/Folien-Verbund mit hoher Lichttransmission erhalten. Die aufgetragene Schmelzenschicht zeigte eine Dicke von ~ 50 µm, das damit erzielte Flächengewicht des Auftrages betrug ~ 100 g/m², so dass das Gesamtflächengewicht des Verbundes ~ 500 g/m² betrug. Die mechanischen Eigenschaften des Verbundes betrugen 950 N/5 cm Reißfestigkeit sowie 45 % Dehnung. Die Gesamtlichttransmission im sichtbaren Bereich (380 - 780 nm) betrug 82 %. Der auf diese Weise erhaltene Verbund zeigte eine ausgezeichnete Haftung der verbundenen Schichten. Zuschnitte aus dem Verbundmaterial ließen sich problemlos thermisch in einem Temperaturbereich von 170 bis 190 °C miteinander verschweißen.

## Patentansprüche

1. Verbund auf Basis von thermoplastischem Fluorpolymer umfassend wenigstens ein textiles Gebilde und wenigstens eine darauf aufgebrachte Schicht, wobei das wenigstens eine textile Gebilde und die wenigstens eine darauf aufgebrachte Schicht jeweils aus Materialien bestehen, welche ein Terpolymer aus Tetrafluorethylen, Hexafluorpropen und Vinylidenfluorid enthalten,
**dadurch gekennzeichnet, dass**
das in dem wenigstens einen textilen Gebilde enthaltene Terpolymer einen höheren Kristallitschmelzpunkt aufweist als das in der wenigstens einen darauf aufgebrachten Schicht enthaltene Terpolymer.

2. Verbund nach Anspruch 1,
**dadurch gekennzeichnet, dass**
das in dem wenigstens einen textilen Gebilde enthaltene Terpolymer einen um zumindest 10 °C höheren Kristallitschmelzpunkt aufweist als das in der wenigstens einen darauf aufgebrachten Schicht enthaltene Terpolymer.

3. Verbund nach Anspruch 1 oder 2,
**dadurch gekennzeichnet, dass**
das in dem wenigstens einen textilen Gebilde enthaltene Terpolymer einen Kristallitschmelzpunkt zwischen 150 und 200 °C aufweist und das in der wenigstens einen darauf aufgebrachten Schicht enthaltene Terpolymer einen Schmelzpunkt zwischen 100 und 130 °C aufweist.

4. Verbund nach zumindest einem der vorhergehenden Ansprüche,
**dadurch gekennzeichnet, dass**
das wenigstens eine textile Gebilde aus einem Material besteht, welches aus einer Mischung aus einem Terpolymer aus Tetrafluorethylen, Hexafluorpropen und Vinylidenfluorid und einer weiteren Verbindung ausgewählt aus der aus Glas, Kohlenstoff, Polyamid, Polytetrafluorethylen, Polyester, Aramid und beliebigen Mischungen von zwei oder mehr der vorstehenden Verbindungen bestehenden Gruppe aufgebaut ist.

5. Verbund nach zumindest einem der vorhergehenden Ansprüche,
**dadurch gekennzeichnet, dass**
das wenigstens eine textile Gebilde aus einem Material besteht, welches 30 bis 50 Gew.-% Terpolymer aus Tetrafluorethylen, Hexafluorpropen und Vinylidenfluorid enthält.

6. Verbund nach zumindest einem der Ansprüche 1 bis 3,
**dadurch gekennzeichnet, dass**
das wenigstens eine textile Gebilde aus einem Material besteht, welches aus einem Terpolymer aus Tetrafluorethylen, Hexafluorpropen und Vinylidenfluorid oder aus einer Mischung aus zwei oder mehr verschiedenen Terpolymeren aus Tetrafluorethylen, Hexafluorpropen und Vinylidenfluorid besteht.

7. Verbund nach zumindest einem der vorhergehenden Ansprüche,
**dadurch gekennzeichnet, dass**
das textile Gebilde als Gewebe, Gewirke und/oder Gelege ausgebildet ist.

8. Verbund nach zumindest einem der vorhergehenden Ansprüche,
**dadurch gekennzeichnet, dass**
die wenigstens eine Schicht aus einem Material besteht, welches aus einem Terpolymer aus Tetrafluorethylen, Hexafluorpropen und Vinylidenfluorid oder aus einer Mischung aus zwei oder mehr verschiedenen Terpolymeren aus Tetrafluorethylen, Hexafluorpropen und Vinylidenfluorid aufgebaut ist.

9. Verbund nach Anspruch 8,
**dadurch gekennzeichnet, dass**
das Material der wenigstens einen Schicht ferner wenigstens einen weiteren Zusatzstoff ausgewählt aus der aus Farbstoffen, Pigmenten, Füllstoffen, Additiven oder beliebigen Mischungen hiervon bestehenden Gruppe enthält, wobei das Material als Zusatzstoff vorzugsweise Polytetrafluorethylen, besonders bevorzugt in Form von Pulver, enthält.

10. Verbund nach zumindest einem der vorhergehenden Ansprüche,
**dadurch gekennzeichnet, dass**
die wenigstens eine Schicht unmittelbar, d.h. insbesondere ohne weitere Zwischenschicht, auf dem wenigstens einen textilen Substrat aufgebracht ist.

11. Verbund nach zumindest einem der vorhergehenden Ansprüche,
**dadurch gekennzeichnet, dass**
der Verbund eine Durchlässigkeit für sichtbares Licht mit einer Wellenlänge von 380 bis 780 nm von zumindest 50 % aufweist.

12. Verbund nach zumindest einem der vorhergehenden Ansprüche,
**dadurch gekennzeichnet, dass**
dieser flächenförmig ausgebildet ist und Öffnungen aufweist, die ggf. mit Folien oder Platten beispielsweise aus Terpolymer aus Tetrafluorethylen, Hexafluorpropen und Vinylidenfluorid festhaftend verschlossen sind.

13. Verfahren zur Herstellung eines Verbundes nach zumindest einem der Ansprüche 1 bis 12, umfassend die Schritte:
a) Herstellen eines textilen Gebildes aus einem Material, welches ein Terpolymer aus Tetrafluorethylen, Hexafluorpropen und Vinylidenfluorid enthält, und
b) Aufbringen von wenigstens einer Schicht auf das textile Gebilde, wobei die wenigstens eine Schicht aus einem Material besteht, welches ein Terpolymer aus Tetrafluorethylen, Hexafluorpropen und Vinylidenfluorid enthält.

14. Verfahren nach Anspruch 13,
**dadurch gekennzeichnet, dass**
die wenigstens eine Schicht auf das textile Gebilde aufgebracht wird, indem eine Lösung enthaltend ein organisches Lösemittel und darin gelöstes Terpolymer auf das textile Gebilde aufgebracht wird und das Lösemittel anschließend beispielsweise durch Trocknen entfernt wird, oder die wenigstens eine Schicht auf das textile Gebilde aufgebracht wird, indem eine wässrige Dispersion, welche das Terpolymer enthält, auf das textile Gebilde aufgebracht wird und das Wasser anschließend beispielsweise durch Trocknen entfernt wird, oder die wenigstens eine Schicht auf das textile Gebilde durch Schmelzbeschichtung aufgebracht wird.

15. Verwendung eines Verbundes nach zumindest einem der Ansprüche 1 bis 12 als Abdeckung oder Bespannung im Schiffsbau oder in der Luft- und Raumfahrt, als Membran in der Architektur oder in der Solartechnik oder als Lärmschutzmaterial.

## Claims

1. A composite on the basis of thermoplastic fluoropolymers including at least one textile structure and at least one layer applied thereto, wherein the at least one textile structure and the at least one layer applied thereto each consist of a material which contains a terpolymer from tetrafluoroethylene, hexafluoropropene and vinylidene fluoride,
**characterised in that**
the terpolymer contained in the at least one textile structure has a higher crystallite melting point than the terpolymer contained in the at least one layer applied thereto.

2. A composite in accordance with claim 1,
**characterised in that**
the terpolymer contained in the at least one textile structure has a crystallite melting point which is at least 10 °C higher than the terpolymer contained in the at least one layer applied thereto.

3. A composite in accordance with claim 1 or claim 2,
**characterised in that**
the terpolymer contained in the at least one textile structure has a crystallite melting point between 150 and 200 °C and the terpolymer contained in the least one layer applied thereto has a melting point between 100 and 130 °C.

4. A composite in accordance with at least one of the preceding claims,
**characterised in that**
the at least one textile structure comprises a material which is built up from a mixture of a terpolymer from tetrafluoroethylene, hexafluoropropene and vinylidene fluoride, and a further compound selected from the group consisting of glass, carbon, polyamide, polytetrafluoroethylene, polyester, aramide, and any desired mixtures of two or more of the above named compounds.

5. A composite in accordance with at least one of the preceding claims,
**characterised in that**
the at least one textile structure comprises a material which contains 30 to 50 % by weight terpolymer of tetrafluoroethylene, hexafluoropropene and vinylidene fluoride.

6. A composite in accordance with at least one of the claims 1 to 3,
**characterised in that**
the at least one textile structure comprises a material which consists of a terpolymer of tetrafluoroethylene, hexafluoropropene and vinylidene fluoride or a mixture of two or more different terpolymers of tetrafluoroethylene, hexafluoropropene and vinylidene fluoride.

7. A composite in accordance with at least one of the preceding claims,
**characterised in that**
the textile structure is selected as a woven fabric, a knitted fabric and/or layers of rovings.

8. A composite in accordance with at least one of the preceding claims,
**characterised in that**
the at least one layer comprises a material which is built up from a terpolymer of tetrafluoroethylene, hexafluoropropene and vinylidene fluoride, or of a mixture of two or more different terpolymers of tetrafluoroethylene, hexafluoropropene and vinylidene fluoride.

9. A composite in accordance with claim 8,
**characterised in that**
the material of the at least one layer further contains a further additional material selected from the group consisting of dies, pigments, fillers, additives, or desired mixtures hereof, with the material preferably containing a polytetrafluoroethylene, particularly preferably in the form of powder as the additional material.

10. A composite in accordance with at least one of the preceding claims,
**characterised in that**
the at least one layer is directly applied, i.e. in particular without a further intermediate layer, to the at least one textile substrate.

11. A composite in accordance with at least one of the preceding claims,
**characterised in that**
the composite has a permeability of at least 50 % for visible light with a wavelength from 380 to 780 nm.

12. A composite in accordance with at least one of the preceding claims,
**characterised in that**
it is areal and has openings which are optionally closed off by firmly adherent foils or plates, for example of terpolymers of tetrafluoroethylene, hexafluoropropene and vinylidene fluoride.

13. A method for the manufacture of a composite in accordance with at least one of the claims 1 to 12, comprising the steps:
a) manufacture of a textile structure of a material which con- tains a terpolymer of tetrafluoroethylene, hexafluoropropene and vinylidene fluoride, and
b) application of at least one layer onto the textile structure, with the at least one layer consisting of a material which contains a terpolymer of tetrafluoroethylene, hexafluoropropene and vi- nylidene fluoride.

14. Method in accordance with claim 13,
**characterised in that**
the at least one layer is applied onto the textile structure **in that** a solution containing an organic solvent and terpolymer dissolved therein is applied to the textile structure and the solvent is subsequently removed, for example by drying, or the at least one layer is applied to the textile structure **in that** an aqueous dispersion, which contains the terpolymer, is applied to the textile structure and the water is subsequently removed, for example by drying, or the at least one layer is applied to the textile structure by melt coating.

15. Use of a composite in accordance with at least one of the claims 1 to 12 as a cover or skin of fabric in boat construction or in air travel or space travel, as a membrane in architecture or in solar technology or as a noise protection material.

## Revendications

1. Composite à base de fluoropolymère thermoplastique comprenant au moins une structure textile et au moins une couche appliquée sur celle-ci, dans lequel ladite au moins une structure textile et ladite au moins une couche appliquée sur celle-ci sont composées respectivement de matériaux qui contienne un terpolymère de tétrafluoroéthylène, hexafluoropropène et fluorure de vinylidène,
**caractérisé en ce que**
le terpolymère contenu dans ladite au moins une structure textile présente un point de fusion cristallite plus élevé que le terpolymère contenu dans ladite au moins une couche appliquée sur celle-ci.

2. Composite selon la revendication 1,
**caractérisé en ce que**
le terpolymère contenu dans ladite au moins une structure textile présente un point de fusion cristallite d'au moins 10° C plus élevé que le terpolymère contenu dans ladite au moins une couche appliquée sur celle-ci.

3. Composite selon la revendication 1 ou 2,
**caractérisé en ce que** le terpolymère contenu dans ladite au moins une structure textile présente un point de fusion cristallite entre 150 et 200°C, et le terpolymère contenu dans ladite au moins une couche appliquée sur celle-ci présente un point de fusion entre 100 et 130°C.

4. Composite selon l'une au moins des revendications précédentes, **caractérisé en ce que** ladite au moins une structure textile est en un matériau qui est composé d'un mélange d'un terpolymère parmi tétrafluoroéthylène, hexafluoropropène et fluorure de vinylidène et d'un autre composé choisi parmi le groupe composé de verre, carbone, polyamide, polytétrafluoroéthylène, polyester, aramide, et des mélanges quelconques de deux ou plusieurs des composés précédents.

5. Composite selon l'une au moins des revendications précédentes,
**caractérisé en ce que** ladite au moins une structure textile est en un matériau qui contient 30 à 50 % en poids de terpolymère parmi tétrafluoroéthylène, hexafluoropropène et fluorure de vinylidène.

6. Composite selon l'une au moins des revendications 1 à 3,
**caractérisé en ce que** ladite au moins une structure textile est en un matériau qui est composé d'un terpolymère parmi tétrafluoroéthylène, hexafluoropropène et fluorure de vinylidène, ou d'un mélange de deux ou plusieurs terpolymères différents parmi tétrafluoroéthylène, hexafluoropropène et fluorure de vinylidène.

7. Composite selon l'une au moins des revendications précédentes,
**caractérisé en ce que** la structure textile est réalisée sous forme de tissu, de tricot et/ou de stratifil.

8. Composite selon l'une au moins des revendications précédentes,
**caractérisé en ce que** ladite au moins une couche est en un matériau qui est constitué d'un terpolymère parmi tétrafluoroéthylène, hexafluoropropène et fluorure de vinylidène, ou bien d'un mélange de deux ou plusieurs terpolymères différents parmi tétrafluoroéthylène, hexafluoropropène et fluorure de vinylidène.

9. Composite selon la revendication 8,
**caractérisé en ce que** le matériau de ladite au moins une couche contient en outre au moins un autre additif choisi parmi le groupe constitué des colorants, pigments, agents de charge, additifs ou des mélanges quelconques de ceux-ci, ledit matériau contenant à titre d'additif de préférence du polytétrafluoroéthylène, de manière particulièrement préférée sous la forme de poudre.

10. Composite selon l'une au moins des revendications précédentes,
**caractérisé en ce que** la dite au moins une couche est appliquée directement, c'est-à-dire en particulier sans autre couche intermédiaire, sur ledit au moins un substrat textile.

11. Composite selon l'une au moins des revendications précédentes,
**caractérisé en ce que** le composite présente une transparence d'au moins 50 % pour la lumière visible avec une longueur d'onde de 380 à 780 nm.

12. Composite selon l'une au moins des revendications précédentes,
**caractérisé en ce que** celui-ci est réalisé sous forme surfacique et présente des ouvertures qui sont refermées le cas échéant avec des feuilles ou des plaques fermement adhérées, par exemple en terpolymère parmi tétrafluoroéthylène, hexafluoropropène et fluorure de vinylidène.

13. Procédé pour la fabrication d'un composite selon l'une au moins des revendications 1 à 12, comprenant les étapes suivantes :
a) fabrication d'une structure textile en un matériau qui contient un terpolymère parmi tétrafluoroéthylène, hexafluoropropène et fluorure de vinylidène, et
b) application d'au moins une couche sur la structure textile, ladite au moins une couche étant en un matériau qui contient un terpolymère parmi tétrafluoroéthylène, hexafluoropropène et fluorure de vinylidène.

14. Procédé selon la revendication 13,
**caractérisé en ce que**
ladite au moins une couche est appliquée sur la structure textile en appliquant sur la structure textile une solution contenant un solvant organique et un terpolymère dissous dans celui-ci, et le solvant est ensuite supprimé, par exemple par séchage, ou bien ladite au moins une couche est appliquée sur la structure textile en appliquant sur la structure textile une dispersion aqueuse qui contient le terpolymère, et l'eau est ensuite supprimée, par exemple par séchage, ou encore ladite au moins une couche est appliquée sur la structure textile par revêtement-fusion.

15. Utilisation d'un composite selon l'une au moins des revendications 1 à 12 comme couverture ou comme tenture dans la construction navale ou dans la construction aéronautique et astronautique, à titre de membrane dans l'architecture ou dans les techniques solaires, ou bien comme matériau de protection phonique.
